# EUROPEAN PATENT SPECIFICATION

(11) **EP 2 693 513 B1**
(45) Date of publication and mention of the grant of the patent: **18.11.2015**
(21) Application number: 13177971.2
(22) Date of filing: 25.07.2013
(51) Int. Cl.: H01M 2/02, H01M 10/04

(54) **A container for plates of a battery**
Behälter für Platten einer Batterie
Récipient pour plaques d'un accumulateur

(30) Priority: 03.08.2012 IT VI20120200
(43) Date of publication of application: 05.02.2014
(73) Proprietor: Biasin SRL, 36045 Madonna di Lonigo (VI) (IT)
(72) Inventor: Biasin, Renato, 36050 Montorso Vicentino (VI) (IT)
(74) Representative: Bonini, Ercole

(56) References cited:
- EP-A2- 1 515 379
- DE-B3-102007 030 652
- US-A- 2 812 376
- US-A- 4 927 717
- US-A1- 2003 104 263

## Description

The present invention concerns a container for the plates of an electric battery used in motor vehicles.

It is known that an electric battery is constituted by a plurality of galvanic cells where a "reversible" oxidation-reduction reaction takes place, through which it is possible to alternatively accumulate and draw electric energy.

In particular, the galvanic cell of a lead battery is constituted by a container inside which there is an electrolyte consisting of an aqueous solution of sulphuric acid in which the electrodes are immersed, said electrodes being commonly called "plates" and being positioned at a short distance from each other.

With particular reference to modern lead batteries, the plates are constituted by variously shaped grids, in the compartments of which the paste, formed by a mixture of oxides and lead salts, is compressed.

In general, the plates inserted in the respective cells of the battery are compacted against each other and inserted through pressure. EP1515379, US 2812376 and US 20030104263 disclose different compaction means.

At present, the cells of electric batteries, in order to maintain the plates compacted against each other at the moment of insertion, are provided with rigid laminar projections, protruding perpendicularly from one or more of the walls that delimit each cell and carried out in a single piece with the cell itself, so that the more external cells counteract the laminar projections.

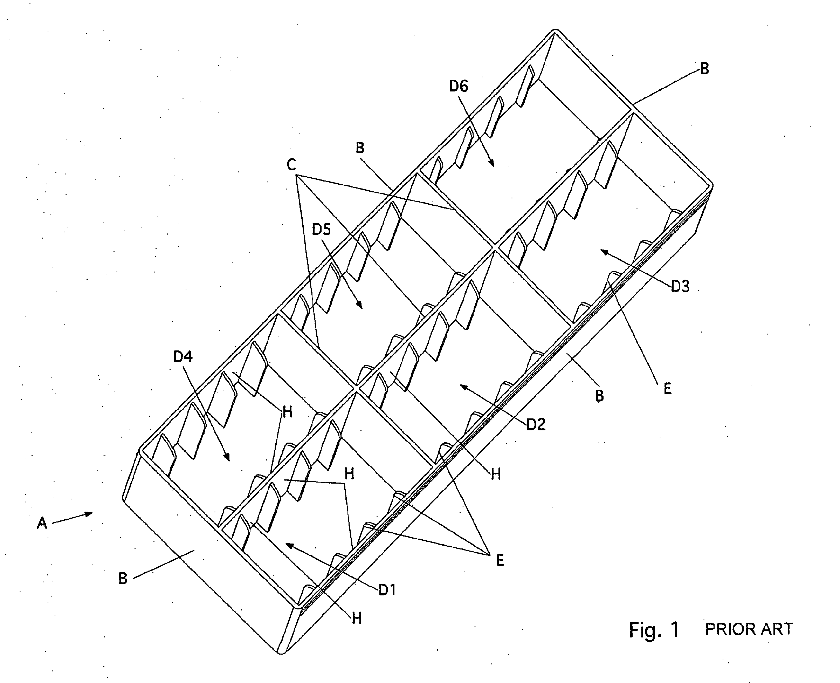

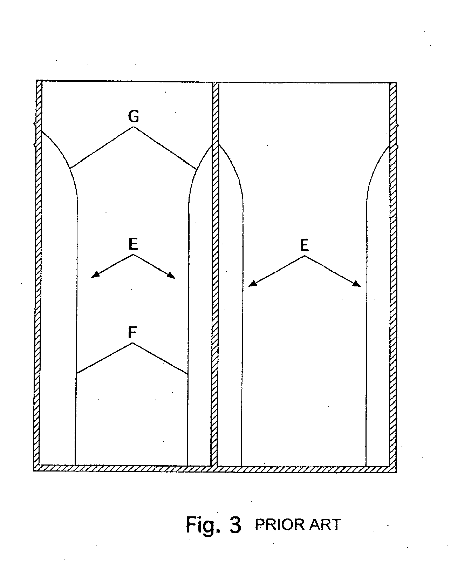

The known technique mentioned above is schematically illustrated in Figures 1, 2 and 3.

Figures 1, 2 and 3 show a container **A** for plates of the known type, which is constituted by a plurality of external walls **B** and internal walls **C** that intersect each other at right angles so as to define a plurality of rectangular cells **D** adjacent to one another.

With reference to Figures 1 and 2, the cells **D1, D2, D3, D4, D5, D6** are provided with laminar projections **E** that protrude from the internal surfaces **H** of the walls **B.**

It can be noted that the laminar projections **E** are eight for each cell and protrude from each internal surface **H** of each cell. However, according to a variant embodiment not illustrated in the figure, the laminar projections may also be more or less than eight.

With reference to Figure 1, it can be observed that the laminar projections **E** of the cell **D4** have a different height with respect to the cells **D5** and **D6.**

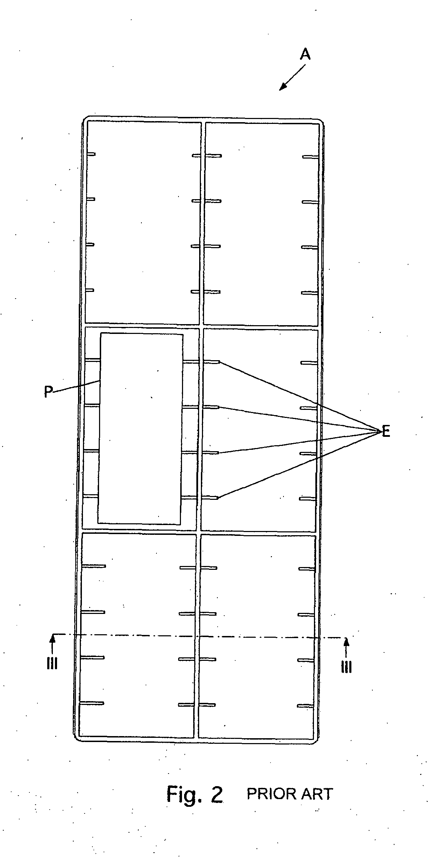

The height of these laminar projections **E** can vary according to the number of plates **P** (visible in Figure 2) to be inserted in the corresponding cells.

In particular, if a considerable number of plates **P** must be inserted in each cell **D,** the laminar projections **E** will have a reduced height and vice versa.

In practice, a pack of compacted plates **P** is inserted from above by pressing it into the container **A,** so that the upper ends **F** of the profile of the laminar projections **E** serve as counteracting elements with respect to the more external plates **P.**

The insertion of the plates **P** in the cells **D1, D2, D3, D4, D5, D6** is facilitated by the curved end **G,** visible in Figure 3, of the laminar projections **E** that facilitates the initial insertion of the plates **P** and, once the insertion operation has been completed, the pack of compacted plates **P** remains interposed between the upper ends **F** of the laminar projections **E** opposite each other, according to a "sandwich" configuration.

According to the customer's requests, therefore, the manufacturer of the containers **A** must produce different types of containers with laminar projections that protrude more or less from the cell walls depending on the quantity of plates to be inserted in the cell.

This makes it necessary for the manufacturer to produce different types of moulds, one per each type of laminar projection, and also to keep considerable stocks for the various types of moulds.

In order to overcome these drawbacks, a container for electric batteries has been created that is provided with laminar projections that are inclined with respect to the surface from which they protrude and are consequently flexible. This second type of laminar projections is not illustrated for the sake of simplicity.

The laminar projections made according to said second type are always made in a single piece with the walls of the container cell.

This second type of laminar projections, being flexible, is made using a single mould and therefore eliminates the problem of having to produce different types of moulds and to keep large stocks.

However, the flexible laminar projections lose elasticity over time and tend to deform permanently.

Consequently, when the container of the plates is moved in any position, the flexible laminar projections are not able any more to keep the plates stationary in their position.

The object of the present invention is to eliminate the above mentioned drawbacks.

In particular, it is one object of the present invention to provide a container for the plates of an electric battery that eliminates the need for the manufacturer to produce a plurality of moulds for each container to be made, depending on the number of plates that must be positioned in the cells of the container.

It is a further object of the present invention to provide a container for the plates of an electric battery that is capable of maintaining the plates inserted in its cells so that they remain compacted and stationary in their insertion position even when the electric battery is moved to any other position.

The objects illustrated above are achieved by a container for plates according to the present invention, whose main characteristics are in accordance with the contents of the first claim.

Further characteristics and details of the container for plates according to the present invention are the subject of the dependent claims.

Advantageously, the container for plates according to the present invention comprises at least one laminar element made of an elastically deformable material that deforms laterally to a higher or lower extent depending on the number of plates, inserted in the container cell, with which it comes into contact.

Still advantageously, said laminar element belonging to the container for plates according to the invention is made in a single version that adapts to different quantities of plates inserted in the cells of the container.

Still advantageously, the laminar element belonging to the container for plates according to the invention is provided at one end with a plurality of flexible laminar projections that facilitate the insertion of the plates in the container cells.

Still advantageously, according to a preferred embodiment of the invention, the laminar element belonging to the container for plates according to the invention is provided with a shaped slit arranged in central position with respect to its width, which allows the laminar element to deform homogeneously over its entire surface when subjected to deformation.

The above mentioned objects and advantages, together with others that will be highlighted below, are illustrated in greater detail in the description of a preferred embodiment of the invention, provided by way of example without limitation with reference to the attached drawings, wherein:
- Figure 1 shows an axonometric view of a container according to the known art;
- Figure 2 shows a plan view of the container of Figure 1 containing some compacted plates;
- Figure 3 shows a sectional view from below of the container of Figure 2 according to axis III-III;
- Figure 4a shows an axonometric view of the container according to the invention;
- Figure 4b shows a view of a detail of Figure 4a;
- Figure 5 shows a plan view of Figure 4a;
- Figure 6 shows a sectional view from below of the container of Figure 5 according to axis VI-VI;
- Figure 7 shows a partially exploded axonometric view of a detail of the container of Figure 4a;
- Figure 8 shows a plan view of the container of Figure 4a containing some compacted plates.

The container according to the invention is described with reference to Figures from 4a to 8.

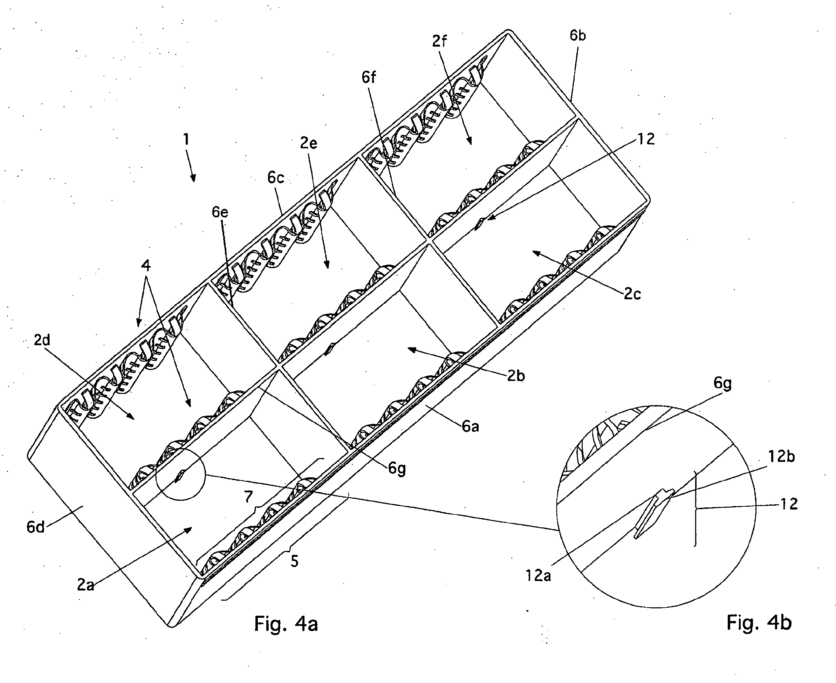

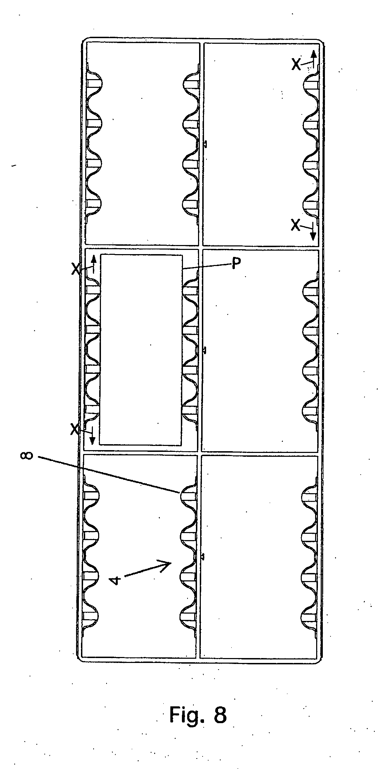

With reference to Figure 4a, the container for plates according to the invention, indicated as a whole by **1,** comprises a plurality of walls **6a, 6b, 6c, 6d, 6e, 6f**, **6g** that intersect each other to define a plurality of adjacent cells **2a, 2b, 2c, 2d, 2e, 2f** suited to contain the plates **P** (visible in Figure 8).

According to the present invention, the inside of each one of the cells **2a, 2b, 2c, 2d, 2e**, **2f** is provided with at least one laminar element **4** made of an elastically deformable material, provided with a first surface **5,** resting on one of the walls **6a, 6b, 6c, 6d, 6e, 6f, 6g** of the respective cell **2a, 2b, 2c, 2d, 2e, 2f**, and with a second surface **7** opposite the first surface **5** and placed in contact with the most external plate belonging to the pack of plates **P** (see Figure 4a).

With reference to the cell **2a,** the laminar element **4** is shaped in such a way as to have a plurality of convex portions **8a, 8b, 8c, 8d** on the second surface **7** and is constrained to the wall **6a** of the cell **2a** through connection means.

In Figure 4a it is possible to observe that the inside of each one of the cells **2a, 2b, 2c, 2d, 2e, 2f** is provided with a laminar element **4,** as can be observed in the cells **2a, 2b, 2c** of the container **1,** or two laminar elements **4** facing and opposing each other, as can be observed in cells **2d, 2e, 2f** of the container **1.** In particular, with reference to Figure 4a, the container **1** is delimited by four external walls **6a, 6b, 6c, 6d.**

The container **1** also comprises three internal walls, respectively **6e, 6f, 6g,** wherein the walls **6e**, **6f** are parallel to and spaced from the walls **6b** and **6d**, while the wall **6g** is parallel to and spaced from the walls **6a** and **6c.**

In this way, the container **1** has six adjacent cells, respectively **2a, 2b, 2c, 2d, 2e, 2f.**

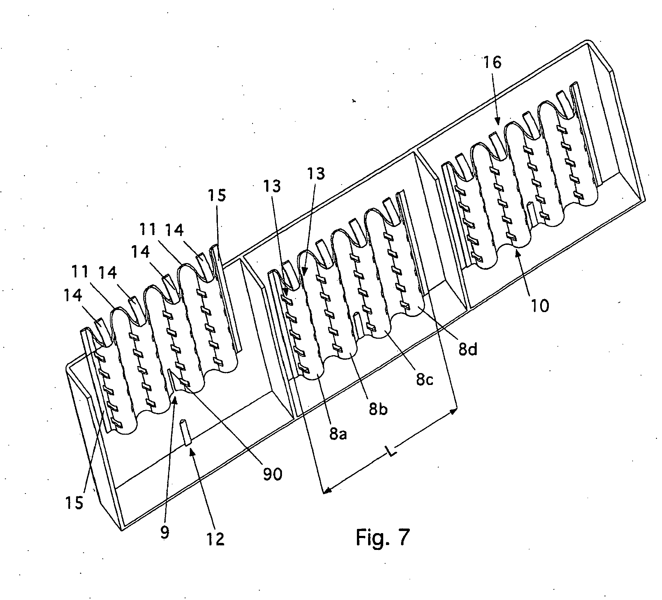

Regarding the connection means, and making reference to Figure 7, these are removable and are of the type coupled through a sliding movement.

In particular, as can be observed in Figures 4a and 7, the connection means comprise a shaped slit **9** belonging to each laminar element **4.**

The shaped slit **9** develops starting from one of the ends **10** of the laminar element **4** and extends along one of the concave portions **11** of the laminar element **4** itself.

With reference to the detail shown in Figure 4b regarding the cell **2a,** the connection means also comprise a shaped protruding portion **12** obtained in a single piece from the wall **6g** of the cell **2a.**

According to a preferred embodiment of the invention, shown in Figures from 5 to 8, the laminar elements **4** are positioned in each cell **2a, 2b, 2c, 2d, 2e, 2f** on two opposing walls.

In particular, and with reference to the cell **2a,** each one of the two opposing walls **6a, 6g** is provided with the shaped protruding portion **12,** in such a way as to removably constrain the laminar elements **4** to the corresponding opposing walls **6a, 6g** of the cell **2a.**

According to a variant embodiment, shown in Figure 4a, however, in any cell of the container **1** there may be just one laminar element **4** and, consequently, just one shaped protruding portion **12.**

As shown in Figure 4b, the shaped protruding portion **12** has a first section **12a** that is perpendicular to the wall **6g** and a second section **12b** that is perpendicular to the first section and such as to give the shaped protruding portion **12** a substantially T-shaped configuration in cross section.

The coupling of the slit **9** with the respective shaped protruding portion **12** is possible thanks to the fact that they have matching profiles and takes place, as mentioned above, through a sliding movement, so that the slit **9** of the laminar element with its end **90** hits against the first section **12a** of the shaped protruding portion **12** in the form of a T, as shown in Figure 7.

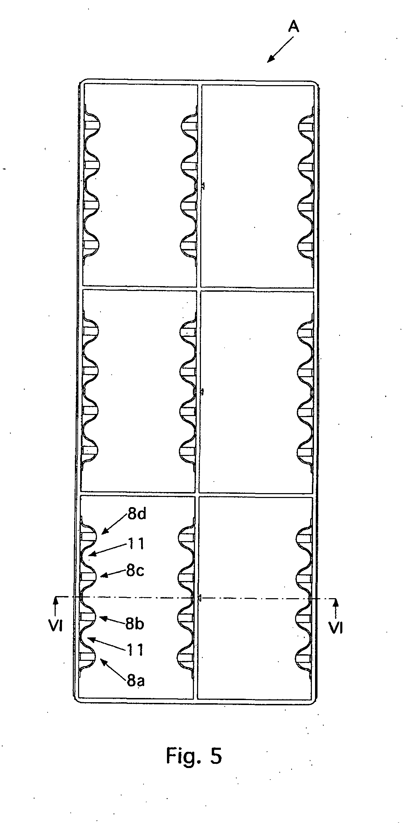

Regarding the laminar element **4,** with reference to Figures 5 and 7, it has an undulating cross section and is also provided with a plurality of square through holes **13** for the passage of an electrolyte. According to a variant embodiment of the invention not illustrated herein, the through holes can also have a different geometrical shape.

The square holes **13** are laterally opposite with respect to each one of the convex portions, represented by the crests **8a, 8b, 8c, 8d** of the undulating profile of the laminar element **4.**

In particular, the holes **13** located at one side of the crest **8a** are arranged in series and staggered with respect to the holes arranged on the opposite side of the same crest **8a.** The same applies to the holes **13** arranged on the other crests **8b, 8c** and **8d.**

With reference to Figure 7, the laminar element **4** slides along the corresponding wall, having the concave portions **11** and the lateral ends **15** as points of contact with it.

It is also provided, at the level of the end **16** opposite the end **10,** with laminar projections **14** that have a curved and incident profile with respect to the corresponding supporting wall.

Said laminar projections **14** are elastic thanks to the fact that, outside them, there is a lack of material that grants them a certain degree of elasticity.

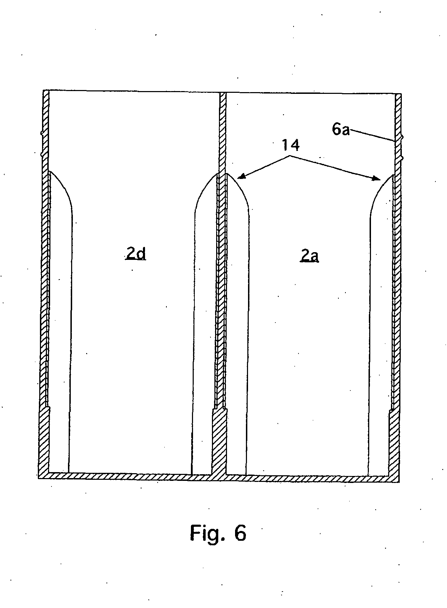

Advantageously and with reference to Figure 6, each one of the laminar projections **14,** thanks to its elasticity and its curved and incident profile with respect to the corresponding supporting wall, facilitates the initial insertion of the compacted plates **P** from above. Figure 6 shows the cells **2a** and **2d,** in accordance with the cross section of Figure 5.

When the compacted plates come into contact with the second surface of the laminar element **4,** they come into contact with the convex portions **8** of the laminar elements **4,** as shown in Figure 8, and this produces a configuration of the "sandwich" type, with the pack of plates **P** interposed between two opposing laminar elements **4.**

In practice, when the compacted plates **P** are inserted, they counteract the individual crests **8a, 8b, 8c, 8d** of the undulating profiles of the laminar elements **4,** as shown in Figure 7.

Depending on the quantity of plates **P** that are inserted in each cell, the laminar element **4** deforms elastically in a more or less remarkable manner, extending towards the walls of the respective cell, according to the direction **X** indicated by the arrows in Figure 8.

Obviously, if the quantity of plates **P** inserted is reduced, the deformation in the direction **X** of the arrows is minimal, while the deformation is more accentuated if the quantity of plates **P** inserted is larger.

Advantageously, according to a preferred embodiment of the invention, the lateral extension of the laminar element **4** is made homogeneous along its entire surface due to the fact that the shaped slit **9** is made in a central position with respect to the width **L** of the laminar element **4,** as shown in Figure 7.

As mentioned above, just one laminar element **4** or two opposing laminar elements **4** may be present in the cells **2a, 2b, 2c, 2d, 2e, 2f.**

It is not possible, instead, to have two opposing shaped slits in the same laminar element, as this type of embodiment would involve the presence in the cell of two corresponding T-shaped protruding portions positioned along the same wall of the cell.

The existence of two T-shaped protruding portions would constrain the laminar element in two opposing points, preventing its deformation towards the side walls of the cell when it comes in contact with the plates.

The laminar element belonging to the container of the invention is preferably made of polypropylene but also other materials having analogous properties can be used.

The above clearly shows that the container for plates that is the subject of the invention achieves all the set objects.

In particular, the container for plates of the invention adapts to the different needs of the customers and is produced with fewer processing cycles than in the past. Consequently, it is sufficient to mould a single container according to the invention, provided with the respective shaped protruding portions in the form of a T, so that it can contain a variable number of plates for an electric battery.

Furthermore, the laminar element belonging to said container is elastically deformable and is produced through a moulding process separately from said container, in standardized sizes so that it comes into contact with a variable number of plates for an electric battery.

In the construction stage, the container according to the invention can be subjected to modifications that must all be considered protected by the present patent, provided that they fall within the scope of the following claims.

Where technical features mentioned in any claim are followed by reference signs, those reference signs have been included for the sole purpose of increasing the intelligibility of the claims and accordingly such reference signs do not have any limiting effect on the protection of each element identified by way of example by such reference signs.

## Claims

1. Container (1) for the plates (P) of an electric battery, said container (1) being provided with a plurality of walls (6a, 6b, 6c, 6d, 6e, 6f, 6g) that intersect each other to define one or more cells (2a, 2b, 2c, 2d, 2e, 2f) adjacent to each other and suited to contain said plates (P), each one of said cells (2a, 2b, 2c, 2d, 2e, 2f) being internally provided with at least one laminar element (4) made of an elastically deformable material, provided with a first surface (5) resting on a wall of the cell and with a second surface (7) opposite said first surface (5) and placed in contact with the most external plate, said laminar element (4) being shaped in such a way as to be provided with a plurality of convex portions (8a, 8b, 8c, 8d) on said second surface (7) and being constrained to said wall (6a, 6b, 6c, 6d, 6e, 6f, 6g) of said cell (2a, 2b, 2c, 2d, 2e, 2f) through connection means, **characterized in that** said connection means are removable and are of the type coupled through a sliding movement.

2. Container (1) for plates (P) according to claim 1, **characterized in that** said connection means comprise a shaped slit (9), belonging to said laminar element (4), and a shaped protruding portion (12) belonging to a wall (6a, 6b, 6c, 6d, 6e, 6f, 6g) of said cell (2a, 2b, 2c, 2d, 2e, 2f), said shaped slit (9) and said shaped protruding portion (12) having matching profiles.

3. Container (1) for plates (P) according to claim 2, **characterized in that** said shaped slit (9) of the laminar element (4) develops starting from an end (10) of said laminar element (4) and extends along one of the concave portions (11) of the laminar element (4).

4. Container (1) for plates (P) according to claim 2, **characterized in that** said shaped protruding portion (12) of said wall (6a, 6b, 6c, 6d, 6e, 6f, 6g) of the cell (2a, 2b, 2c, 2d, 2e, 2f) has a substantially T-shaped cross section.

5. Container (1) for plates (P) according to any of the preceding claims, **characterized in that** said laminar element (4) has an undulating cross section.

6. Container (1) for plates (P) according to any of the preceding claims, **characterized in that** said laminar element (4) has, in proximity to the end (16) opposite the one where there is said shaped slit (9), a plurality of flexible laminar projections (14), each one of which has a curved and incident profile with respect to the supporting wall of said laminar element (4) so as to allow the insertion of one or more plates (P) in each cell (2a, 2b, 2c, 2d, 2e, 2f).

7. Container (1) for plates (P) according to any of the preceding claims, **characterized in that** said laminar element (4) is provided with a plurality of through holes (13) suited to allow the passage of an electrolyte.

8. Container (1) for plates (P) according to any of the preceding claims, **characterized in that** it has, inside each cell (2a, 2b, 2c, 2d, 2e, 2f) of said container (1), two laminar elements (4) constrained to two opposite walls of said cell (2a, 2b, 2c, 2d, 2e, 2f).

## Patentansprüche

1. Behälter (1) für die Platten (P) eines Akkumulators, wobei der besagte Behälter (1) mit einer Vielzahl von Wänden (6a, 6b, 6c, 6d, 6e, 6f, 6g) versehen ist, die einander schneiden, um eine oder mehrere Zellen (2a, 2b, 2c, 2d, 2e, 2f) zu definieren, welche nebeneinander liegen und geeignet sind, die besagten Platten (P) zu enthalten, wobei jede der besagten Zellen (2a, 2b, 2c, 2d, 2e, 2f) innen mit wenigstens einem blätterförmigen Element (4) aus einem elastisch verformbaren Material versehen ist, das eine erste Oberfläche (5) aufweist, die an einer Wand der Zelle anliegt sowie eine zweite Oberfläche (7), die der besagten ersten Oberfläche (5) entgegengesetzt und in Kontakt mit der äußersten Platte positioniert ist, wobei das besagte blätterförmige Element (4) derart geformt ist, dass es eine Vielzahl konvexer Abschnitte (8a, 8b, 8c, 8d) an der besagten zweiten Oberfläche (7) aufweist und durch Verbindungsmittel an der besagte Wand (6a, 6b, 6c, 6d, 6e, 6f, 6g) der besagten Zelle (2a, 2b, 2c, 2d, 2e, 2f) fixiert ist, **dadurch gekennzeichnet, dass** die besagten Verbindungsmittel entfernbar und von dem durch eine Gleitbewegung gekuppelten Typ sind.

2. Behälter (1) für Platten (P) gemäß Patentanspruch 1, **dadurch gekennzeichnet, dass** die besagten Verbindungsmittel einen geformten Schlitz (9) umfassen, der zu dem besagten, blätterförmigen Element (4) gehört, sowie einen geformten, hervorstehenden Abschnitt (12), der zu einer Wand (6a, 6b, 6c, 6d, 6e, 6f, 6g) der besagten Zelle (2a, 2b, 2c, 2d, 2e, 2f) gehört, wobei der besagte Schlitz (9) und der besagte, hervorstehende Abschnitt (12) zusammenpassende Profile haben.

3. Behälter (1) für Platten (P) gemäß Patentanspruch 2, **dadurch gekennzeichnet, dass** der besagte, geformte Schlitz (9) des blätterförmigen Elements (4) sich von einem Ende (10) des besagten, blätterförmigen Elements (4) beginnend entlang eines der konkaven Abschnitte (11) des blätterförmigen Elements (4) erstreckt.

4. Behälter (1) für Platten (P) gemäß Patentanspruch 2, **dadurch gekennzeichnet, dass** der besagte geformte, hervorstehende Abschnitt (12) der besagten Wand (6a, 6b, 6c, 6d, 6e, 6f, 6g) der Zelle (2a, 2b, 2c, 2d, 2e, 2f) einen im Wesentlichen T-förmigen Querschnitt hat.

5. Behälter (1) für Platten (P) gemäß eines jeden der vorstehenden Patentansprüche, **dadurch gekennzeichnet, dass** das besagte, blätterförmige Element (4) einen gewellten Querschnitt hat.

6. Behälter (1) für Platten (P) gemäß eines jeden der vorstehenden Patentansprüche, **dadurch gekennzeichnet, dass** das besagte, blätterförmige Element (4) in der Nähe des Endes (16), das jenem mit dem besagten, geformten Schlitz (9) entgegengesetzt ist, eine Vielzahl flexibler, blätterförmiger Auskragungen (14) aufweist, von denen jede ein gekrümmtes und auf die Stützwand des besagten, blätterförmigen Elements (4) einfallendes Profil aufweist, so dass die Einfügung von einer oder mehreren Platten (P) in jede Zelle (2a, 2b, 2c, 2d, 2e, 2f) möglich ist.

7. Behälter (1) für Platten (P) gemäß eines jeden der vorstehenden Patentansprüche, **dadurch gekennzeichnet, dass** das besagte, blätterförmige Element (4) mit einer Vielzahl von Durchgangsbohrungen (13) versehen ist, die geeignet sind, den Durchfluss eines Elektrolyten zu erlauben.

8. Behälter (1) für Platten (P) gemäß eines jeden der vorstehenden Patentansprüche, **dadurch gekennzeichnet, dass** sich in jeder Zelle (2a, 2b, 2c, 2d, 2e, 2f) des besagten Behälters (1) zwei blätterförmige Elemente (4) befinden, die an zwei entgegengesetzten Wänden der besagten Zelle (2a, 2b, 2c, 2d, 2e, 2f) fixiert sind.

## Revendications

1. Boîte (1) pour plaques (P) d'un accumulateur électrique, ladite boîte (1) étant dotée d'une pluralité de parois (6a, 6b, 6c, 6d, 6e, 6f, 6g) qui se croisent entre elles pour définir une ou plusieurs cellules (2a, 2b, 2c, 2d, 2e, 2f) adjacentes entre elles et aptes à contenir lesdites plaques (P), chacune de dites cellules (2a, 2b, 2c, 2d, 2e, 2f) étant dotée à son intérieur d'au moins un élément laminaire (4) réalisé avec un matériel élastiquement déformable, doté d'une première surface (5) appuyée contre une paroi de la cellule et d'une deuxième surface (7) opposée à ladite première surface (5) et mise en contact avec la plaque la plus externe, ledit élément laminaire (4) étant galbé de façon à présenter une pluralité de portions convexes (8a, 8b, 8c, 8d) sur ladite deuxième surface (7) et étant bloqué à ladite paroi (6a, 6b, 6c, 6d, 6e, 6f, 6g) de ladite cellule (2a, 2b, 2c, 2d, 2e, 2f) par des moyens de raccordement, **caractérisée en ce que** lesdits moyens de raccordement sont amovibles et sont du type accouplés par un mouvement de coulissement.

2. Boîte (1) pour plaques (P) selon la revendication 1, **caractérisée en ce que** lesdits moyens de raccordement comprennent une fente galbée (9), appartenant audit élément laminaire (4), et une saillie galbée (12) appartenant à une paroi (6a, 6b, 6c, 6d, 6e, 6f, 6g) de ladite cellule (2a, 2b, 2c, 2d, 2e, 2f), où ladite fente galbée (9) et ladite saillie galbée (12) présentent des profils correspondants.

3. Boîte (1) pour plaques (P) selon la revendication 2, **caractérisée en ce que** ladite fente galbée (9) de l'élément laminaire (4) se développe à partir d'une extrémité (10) dudit élément laminaire (4) et s'étend le long d'une des portions concaves (11) de l'élément laminaire (4).

4. Boîte (1) pour plaques (P) selon la revendication 2, **caractérisée en ce que** ladite saillie galbée (12) de ladite paroi (6a, 6b, 6c, 6d, 6e, 6f, 6g) de la cellule (2a, 2b, 2c, 2d, 2e, 2f) présente une coupe transversale à profil essentiellement en T.

5. Boîte (1) pour plaques (P) selon l'une quelconque des revendications précédentes, **caractérisée en ce que** ledit élément laminaire (4) présente une coupe transversale à profil ondulé.

6. Boîte (1) pour plaques (P) selon l'une quelconque des revendications précédentes, **caractérisée en ce que** ledit élément laminaire (4) présente, à proximité de l'extrémité opposée (16) à celle où se trouve ladite fente galbée (9), une pluralité de saillies laminaires flexibles (14), chacune de celles-ci présente un profil courbé et incident par rapport à la paroi d'appui dudit élément laminaire (4) afin de consentir l'introduction d'une ou plusieurs plaques (P) dans chaque cellule (2a, 2b, 2c, 2d, 2e, 2f).

7. Boîte (1) pour plaques (P) selon l'une quelconque des revendications précédentes, **caractérisée en ce que** ledit élément laminaire (4) présente une pluralité de trous passants (13) aptes à consentir le passage d'un électrolyte.

8. Boîte (1) pour plaques (P) selon l'une quelconques des revendications précédentes, **caractérisée en ce qu**'elle présente, à l'intérieur de chaque cellule (2a, 2b, 2c, 2d, 2e, 2f) de ladite boîte (1), deux éléments laminaires (4) bloqués à deux parois opposées de ladite cellule (2a, 2b, 2c, 2d, 2e, 2f).
